# EUROPEAN PATENT APPLICATION

(11) **EP 3 462 329 A1**
(43) Date of publication of application: **03.04.2019**
(21) Application number: 18196824.9
(22) Date of filing: 26.09.2018
(51) Int. Cl.: G06F 16/00

(54) **PERSONAL INFORMATION MANAGING PROGRAM, PERSONAL INFORMATION MANAGING METHOD, AND INFORMATION PROCESSING DEVICE**

(30) Priority: 29.09.2017 JP 2017191644
(71) Applicant: FUJITSU LIMITED, Kanagawa 211-8588 (JP)
(72) Inventor: Sato, Naotaka, Kawasaki-shi Kanagawa 211-8588 (JP); Mouri, Akira, Ishikawa, 921-8025 (JP); Nakamura, Yasuaki, Ishikawa, 921-8025 (JP)
(74) Representative: Hoffmann Eitle

(57) **Abstract**

A non-transitory computer-readable storage medium storing a program that causes a processor to execute a process that includes receiving identification information of a user; identifying a region for storing personal information of the user corresponding to the identification information in a memory, and transmitting question information stored in a region accessible with a right of an administrator other than the user to a terminal of the user; and when receiving an answer to the question information, storing the answer in the identified region for storing the personal information of the user.

## Description

### FIELD

The embodiments discussed herein are related to a personal information managing program, a personal information managing method, and an information processing device.

### BACKGROUND

As an example, there is a technology which stores and manages information in a database, searches for the information within the database to use the information.

Examples of the related art include International Publication WO 2013/145129.

### SUMMARY

### TECHNICAL PROBLEM

A service is considered which integrates and manages personal information of users, and discloses the personal information to a desired business entity or the like. However, the personal information of users is not collected easily by merely preparing a database as described above.

One aspect is to provide a personal information managing program, a personal information managing method, and an information processing device that may accumulate personal information efficiently.

### SOLUTION TO PROBLEM

According to one aspect of the embodiments, a non-transitory computer-readable storage medium storing a program that causes a processor to execute a process that includes receiving identification information of a user; identifying a region for storing personal information of the user corresponding to the identification information in a memory, and transmitting question information stored in a region accessible with a right of an administrator other than the user to a terminal of the user; and when receiving an answer to the question information, storing the answer in the identified region for storing the personal information of the user.

### ADVANTAGEOUS EFFECTS OF INVENTION

Personal information may be accumulated efficiently.

### BRIEF DESCRIPTION OF DRAWINGS

FIG. 1 is an explanatory diagram of assistance in explaining personal information management processing of an information processing system according to an embodiment;
FIG. 2 is a block diagram illustrating an example of a configuration of the information processing system according to the embodiment;
FIG. 3 is a diagram illustrating an example of a data configuration of a questionnaire;
FIG. 4 is a diagram illustrating an example of a data configuration of personal information;
FIG. 5 is a diagram illustrating an example of a questionnaire selecting screen;
FIG. 6 is a diagram illustrating an example of a questionnaire answering screen;
FIG. 7 is a diagram illustrating an example of a disclosure destination setting screen;
FIG. 8 is a flowchart illustrating an example of the personal information management processing according to the embodiment;
FIG. 9 is a flowchart illustrating an example of the personal information management processing according to the embodiment;
FIG. 10 is a flowchart illustrating an example of the personal information management processing according to the embodiment; and
FIG. 11 is a diagram illustrating an example of a computer that executes a personal information managing program.

### DESCRIPTION OF EMBODIMENTS

Embodiments of a personal information managing program, a personal information managing method, and an information processing device disclosed in the present application will hereinafter be described in detail with reference to the drawings. Incidentally, the present embodiments do not limit the disclosed technology. In addition, the following embodiments may be combined with each other as appropriate within a scope where no inconsistency arises.

### [Embodiments]

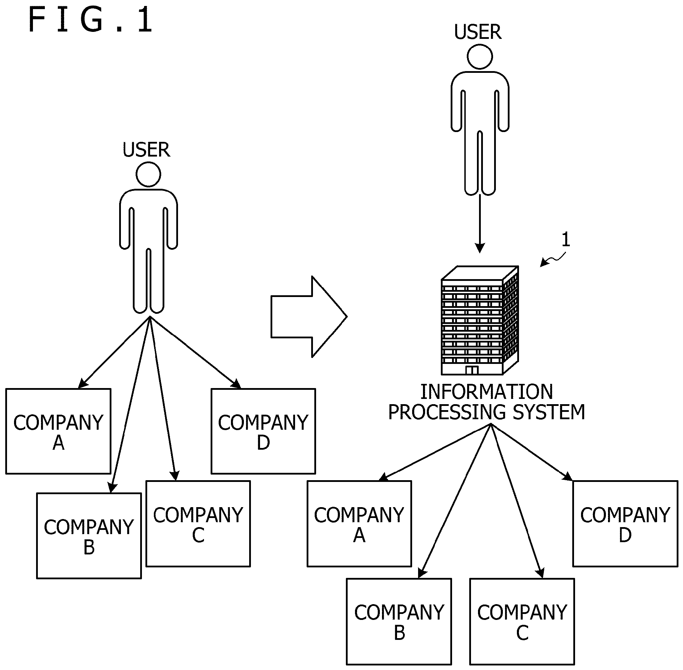

FIG. 1 is an explanatory diagram of assistance in explaining personal information management processing of an information processing system according to an embodiment. An outline of the personal information management processing of the information processing system will be described with reference to the explanatory diagram. As illustrated in FIG. 1, the information processing system 1 integrates and manages personal information of users. Then, each business entity providing an advertisement, service, or the like to users is provided with desired personal information from an information processing device of the information processing system 1. Thus, the information processing device as a personal data store (PDS), for example, provides a mechanism that allows an individual to accumulate and manage own data at an own will of the individual, and has a control function with respect to the provision of the data to a third party. This obviates a need for each business entity to manage the personal information of users individually, and therefore enables easy utilization and application of the personal information with high security.

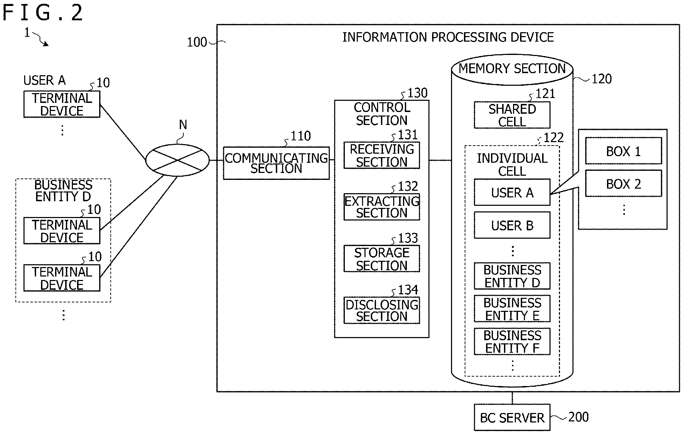

FIG. 2 is a block diagram illustrating an example of a configuration of the information processing system according to the embodiment. Referring to FIG. 2, description will first be made of an example of operation of the information processing system 1. As illustrated in FIG. 2, a user accesses the information processing device 100 by operating a terminal device 10, obtains question information (hereinafter described as a questionnaire), and inputs an answer to the questionnaire. The information processing device 100 stores the answer input by the user as personal information of the user in a memory section 120.

Here, the memory section 120 of the information processing device 100 includes a shared region (hereinafter described as a shared cell) 121 and individual-specific regions (hereinafter described as individual cells) 122 for users. The shared cell 121 stores the above-described questionnaire. In addition, each of the individual cells 122 includes different boxes for respective questionnaire categories. Business entities or the like allowed as disclosure destinations of the stored personal information are set in each box.

The information processing device 100 gives the user providing the personal information a value of virtual currency or the like as an incentive corresponding to an amount of information. The given value is, for example, registered and managed in a BC (blockchain) server 200.

In addition, in a case where the information processing device 100 is requested to disclose the personal information of the user from a terminal device 10 within a business entity, the information processing device 100 discloses the personal information of the target user to the terminal device 10 as a request source when disclosure destinations set in the box in which the personal information of the target user is stored include this business entity. The business entity may, for example, issue a coupon or transmit an advertisement based on the disclosed personal information.

A configuration of the information processing system 1 will next be described in detail. As illustrated in FIG. 2, the information processing system 1 includes terminal devices 10 and an information processing device 100. Incidentally, the number of terminal devices 10 is not limited, and an arbitrary number of terminal devices 10 may be included. The terminal devices 10 are mutually communicatively coupled to the information processing device 100 via a network N. The Internet and other arbitrary kinds of communication networks such as a local area network (LAN) and a virtual private network (VPN), irrespective of whether the communication networks are wired communication networks or wireless communication networks, may be adopted as such a network N.

The terminal devices 10 are, for example, information processing devices for users to use a personal information management service provided by the information processing device 100 using a dedicated application programming interface (API). Stationary and portable personal computers and the like may be used as the terminal devices 10. In addition, mobile communication terminals such as tablet terminals and smart phones may be used as the terminal devices 10.

A terminal device 10, for example, receives an input of selecting the category of a questionnaire to be answered from among displayed questionnaire categories from a user on a questionnaire selecting screen of the personal information management service provided by the information processing device 100. The terminal device 10 transmits information about the input category selection to the information processing device 100 via the network N. In addition, the terminal device 10 receives a questionnaire answering screen of a questionnaire in the selected category from the information processing device 100 via the network N.

The terminal device 10 displays the received questionnaire answering screen, and receives an input of an answer to the questionnaire from the user. The terminal device 10 transmits the input answer to the information processing device 100 via the network N.

In addition, the terminal device 10 receives an input of selecting business entities allowed as answer disclosure destinations for each already input category from the user on a disclosure destination setting screen. The terminal device 10 transmits information about the input disclosure destination selection to the information processing device 100 via the network N.

The information processing device 100 is, for example, an information processing device that provides the questionnaire answering screen to the terminal device 10 using a dedicated API, and stores, as personal information, the answer to the questionnaire, the answer being received from the terminal device 10. The information processing device 100 reads the questionnaire in the selected category from the shared cell 121, generates the questionnaire answering screen, and transmits the questionnaire answering screen to the terminal device 10. In addition, the information processing device 100 stores the answer received from the terminal device 10 as the personal information of the user in a category-specific box of the individual cell 122 for the user. In addition, the information processing device 100 stores the information about the disclosure destinations selected by the user in the box within the individual cell 122, the box for storing the corresponding personal information.

In addition, the information processing device 100 gives the user providing the personal information a value of virtual currency or the like as an incentive corresponding to an amount of information. The given value is, for example, notified to the BC server 200.

In addition, when the information processing device 100 is requested to disclose the personal information of the user from the terminal device 10 of a business entity, the information processing device 100 refers to the disclosure destinations of the box for storing the personal information within the individual cell 122 of the target user. When the disclosure destinations include this business entity, the information processing device 100 discloses the personal information of the target user to the terminal device 10 as a request source for viewing on the terminal device 10.

A configuration of the information processing device 100 will next be described. As illustrated in FIG. 2, the information processing device 100 includes a communicating section 110, a memory section 120, and a control section 130. Incidentally, the information processing device 100 may include various kinds of functional sections possessed by a known computer, for example, functional sections such as various kinds of input devices and audio output devices in addition to the functional sections illustrated in FIG. 2.

The communicating section 110 is, for example, implemented by a network interface card (NIC) or the like. The communicating section 110 is a communication interface that is coupled to the terminal device 10 via the network N by wire or radio, and which controls communication of information with the terminal device 10. For example, the communicating section 110 transmits a screen such as a questionnaire selecting screen, a questionnaire answering screen, or the like input from the control section 130 to the terminal device 10. In addition, the communicating section 110 outputs a questionnaire answer received from the terminal device 10 to the control section 130. In addition, the communicating section 110 outputs, to the control section 130, information for selecting a questionnaire category or information for selecting video information from among a plurality of alternatives, the information being received from the terminal device 10.

The memory section 120 is, for example, implemented by a semiconductor memory element such as a random-access memory (RAM) or a flash memory (Flash Memory) or a storage device such as a hard disk or an optical disk. The memory section 120 includes the shared cell 121 and the individual cells 122. In addition, the memory section 120 stores information used for processing in the control section 130. The memory section 120 is also calls a memory.

Here, the shared cell 121 is a region accessible with the right of an administrator other than users. For example, the administrator of the information processing device 100 may access the shared cell 121 and store information in the shared cell 121.

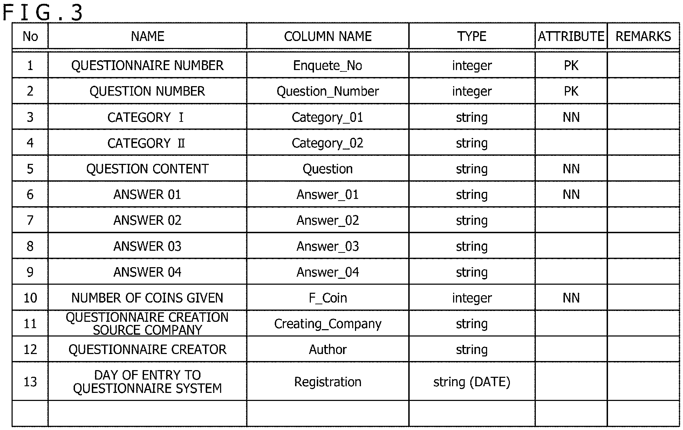

For example, the shared cell 121 stores question information, for example, a questionnaire. FIG. 3 is a diagram illustrating an example of a data configuration of a questionnaire. As illustrated in FIG. 3, for example, the questionnaire includes items (names) such as a questionnaire number, a question number, a category, a question content, answers, the number of coins given, a questionnaire creation source company, a questionnaire creator, and a day of entry to the questionnaire system. In addition, the shared cell 121 stores information such as a column name, a type, an attribute, and remarks in association with the name column indicating each item of the questionnaire.

The questionnaire number is a number identifying the questionnaire. The question number is a number for identifying a plurality of questions belonging to the same questionnaire number. The category represents a classification of the questionnaire, such as entertainment, food, and romance. Incidentally, the questionnaire illustrated in FIG. 3 is classified using a combination of a category I of entertainment and the like and a category II indicating a classification within the category I, the category II being TV, movies, or the like within the category of entertainment and the like.

The answers represent answer alternatives.

For example, the questionnaire illustrated in FIG. 3 includes four answer alternatives, which are answers 01 to 04.

The number of coins given is the number of coins given as an incentive for an answer. The questionnaire creation source company is a business entity that created the questionnaire. The questionnaire creator is the name of a person who created the questionnaire and belongs to the questionnaire creation source company, for example. The day of entry to the questionnaire system is a day that the created questionnaire was stored in the shared cell 121.

An individual cell 122 is a region corresponding to the identification information of the user of a terminal device 10. For example, the individual cell 122 stores an identifier (ID) and a password as the identification information of the user. In addition, the individual cell 122 stores the personal information of the user as an answer to the questionnaire, the personal information corresponding to the identification information of the user of the terminal device 10. The individual cell 122 includes boxes as different regions for respective questionnaire categories. The personal information is stored in a box corresponding to a questionnaire category. This box stores disclosure destination information specifying disclosure destinations of the personal information.

Incidentally, the individual cells 122 include individual cells 122 associated with the identification information of business entities in addition to individual cells 122 associated with the identification information of users. When the information processing device 100 is accessed from the terminal device 10 of a business entity using the identification information of the business entity, information may be stored in the individual cell 122 for the business entity.

In addition, for example, when the information processing device 100 receives a request for the registration of a user online or offline, and issues an ID and a password to the user, an individual cell 122 is created at the same time.

The individual cell 122 may be physically separated from regions of other users, or may be logically distinguished. In addition, the ID and the password are not necessarily limited to the case where the ID and the password are stored in the individual cell 122, and it suffices for the ID and the password to be at least stored anywhere in association with the region of the user.

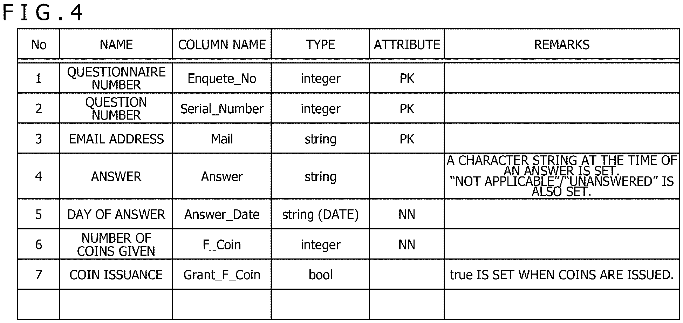

FIG. 4 is a diagram illustrating an example of a data configuration of personal information. As illustrated in FIG. 4, for example, the personal information includes items (names) such as a questionnaire number, a question number, an email address, an answer, an answer day, the number of coins given, and coin issuance. In addition, the individual cell 122 stores information such as a column name, a type, an attribute, and remarks in association with the name column indicating each item of the personal information.

The questionnaire number is a number identifying a questionnaire. The question number is a number for identifying a plurality of questions belonging to the same questionnaire number. The email address is an email address of the user who answered the questionnaire. The answer is a character string input at the time of the answer, the character string being the number of a selected alternative or the like. "Not applicable" or "unanswered" may also be set as the answer. The answer day is a day that the user made the answer. The number of coins given is the number of coins given as an incentive for the answer. The coin issuance indicates whether or not coins are given for the answer. For example, true is set when coins are issued.

The description returns to FIG. 2. The control section 130 is, for example, implemented by a central processing unit (CPU), a micro processing unit (MPU), or the like by executing a program stored in an internal storage device with a RAM as a work area. In addition, the control section 130 may be, for example, implemented by an integrated circuit such as an application specific integrated circuit (ASIC) or a field programmable gate array (FPGA).

The control section 130 includes a receiving section 131, an extracting section 132, a storage section 133, and a disclosing section 134. The control section 130 implements or executes functions and actions of information processing to be described in the following. It is to be noted that the internal configuration of the control section 130 is not limited to the configuration illustrated in FIG. 2, and may be another configuration as long as the configuration performs personal information management processing to be described later.

The receiving section 131 receives the identification information of a user. For example, the receiving section 131 receives the ID and the password of the user via the network N and the communicating section 110, the ID and the password being input from a terminal device 10, and outputs the ID and the password to the extracting section 132.

The extracting section 132 identifies a region for storing the personal information of the user corresponding to the identification information in the memory section 120. In addition, the extracting section 132 transmits, to the terminal device 10 of the user, question information stored in a region accessible with the right of an administrator other than users.

For example, first, the extracting section 132 refers to the individual cells 122, identifies the individual cell 122 corresponding to the ID of the user using the ID and the password of the user, the ID and the password being input from the receiving section 131, and authenticates the user.

Next, the extracting section 132 extracts questionnaire categories from the shared cell 121, and generates a questionnaire selecting screen for making the user select a questionnaire category. In addition, the extracting section 132 transmits the generated questionnaire selecting screen to the terminal device 10, and makes the questionnaire selecting screen presented to the user via an API.

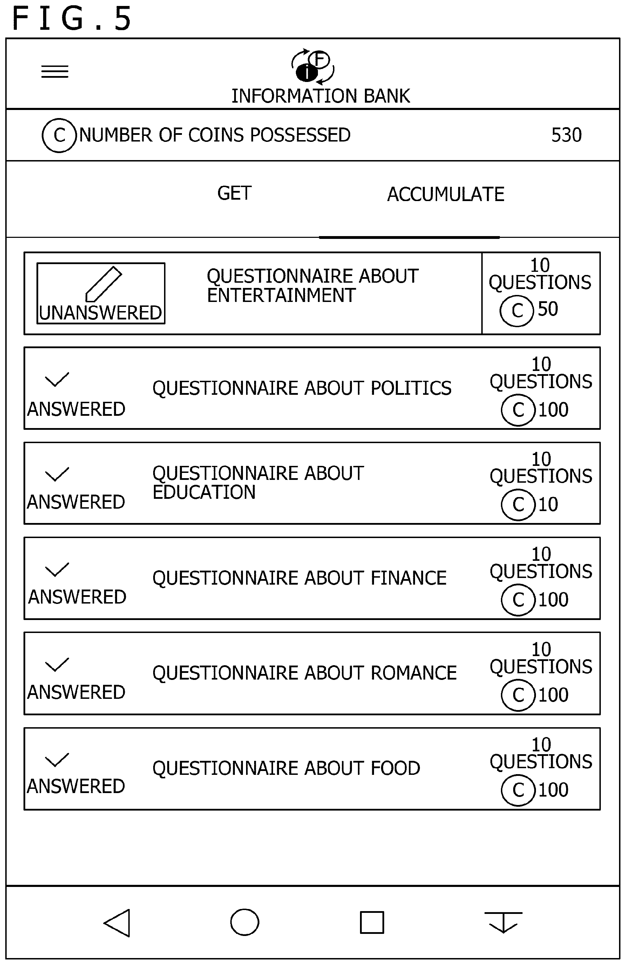

FIG. 5 is a diagram illustrating an example of a questionnaire selecting screen. In the example illustrated in FIG. 5, questionnaire categories such as entertainment, politics, education, finance, romance, and food are illustrated. The extracting section 132 makes the questionnaire selecting screen presented on the terminal device 10 via the API, and receives a category selection input by the user.

Next, the extracting section 132 extracts a questionnaire in the selected category from the shared cell 121, and generates a questionnaire answering screen for making the user input an answer to the questionnaire. In addition, the extracting section 132 transmits the generated questionnaire answering screen to the terminal device 10, and makes the questionnaire answering screen presented to the user via the API.

Incidentally, in a case where the questionnaire in the selected category includes a plurality of questions, the extracting section 132 generates a plurality of questionnaire answering screens for the respective questions. In a case where a questionnaire about food includes 10 questions, for example, the extracting section 132 generates 10 questionnaire answering screens, transmits the 10 questionnaire answering screens to the terminal device 10, and make the 10 questionnaire answering screens sequentially presented on the terminal device 10 via the API.

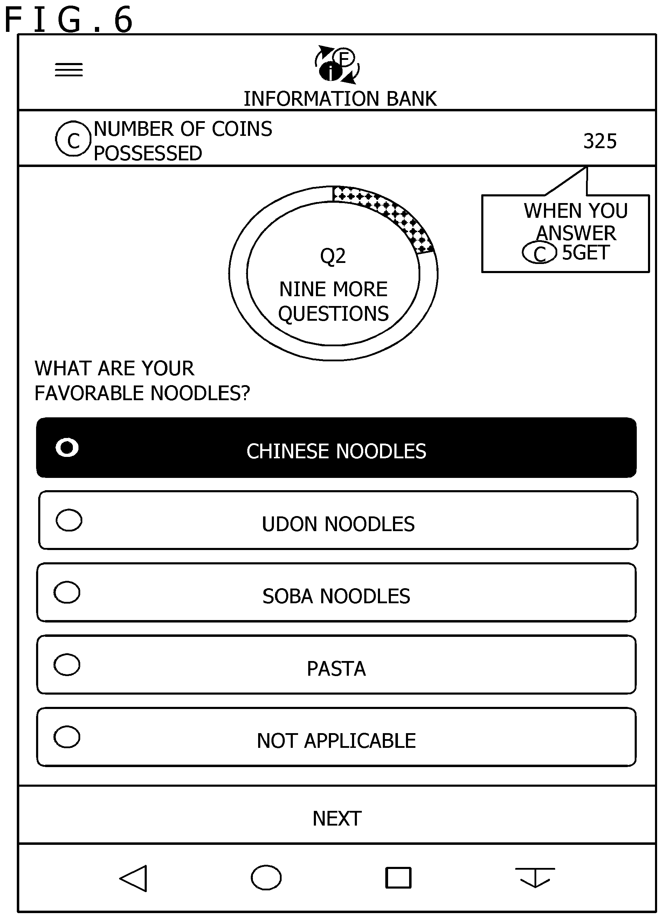

FIG. 6 is a diagram illustrating an example of a questionnaire answering screen. In the example illustrated in FIG. 6, a question content "what are your favorable noodles?" is presented in the selected questionnaire about food. Also presented are five answer alternatives: "Chinese noodles," "udon noodles," "soba noodles," "pasta," and "not applicable."

When an answer to the question information is received, the storage section 133 stores the answer in the identified region for storing the personal information of the user. At this time, the storage section 133 stores the answer in a box corresponding to the category of the question information.

For example, the storage section 133 first receives the input of the answer to the questionnaire by the user via the API, and generates the personal information illustrated in FIG. 4. In addition, the storage section 133 stores the generated personal information in the individual cell 122 corresponding to the ID of the user, the individual cell 122 being identified by the extracting section 132.

Incidentally, when the questionnaire in the category selected by the user includes a plurality of questions, the storage section 133 sequentially receives answers to the questionnaire, the answers being input by the user, and generates the personal information for each of the answers.

The description returns to FIG. 2. When the disclosing section 134 receives a request to disclose the personal information from a disclosure destination specified in the disclosure destination information, the disclosing section 134 outputs the personal information to the disclosure destination. At this time, the disclosing section 134 outputs, to the disclosure destination of the personal information associated on a box-by-box basis, the personal information stored in the corresponding region.

For example, the receiving section 131 receives the identification information of a business entity from the terminal device 10. Next, the extracting section 132 refers to the individual cells 122, identifies the individual cell 122 corresponding to the ID of the business entity using the ID and the password of the business entity, the ID and the password being input from the receiving section 131, and authenticates the business entity.

In this case, by using JavaScript (trademark), for example, the disclosing section 134 refers to the disclosure destination information of individual cells 122 of other users, the disclosure destination information being stored in the memory section 120, and creates a list of users specifying the business entity as a disclosure destination. In addition, the disclosing section 134 transmits a screen indicating the created list to the terminal device 10 of the business entity, and makes the screen presented on the terminal device 10 of the business entity via the API.

In addition, when a request to disclose the personal information of the users included in the list is received from the terminal device 10 of the business entity via the API, the disclosing section 134 obtains the requested personal information of the users, and makes the personal information of the users displayed on the terminal device 10 of the business entity. Thus, the personal information may be disclosed only to the disclosure destinations included in the disclosure destination information.

Incidentally, as described above, the disclosure destination information is set for each questionnaire category. It is therefore possible to specify different business entities as disclosure destinations for each category of personal information as answers to questionnaires.

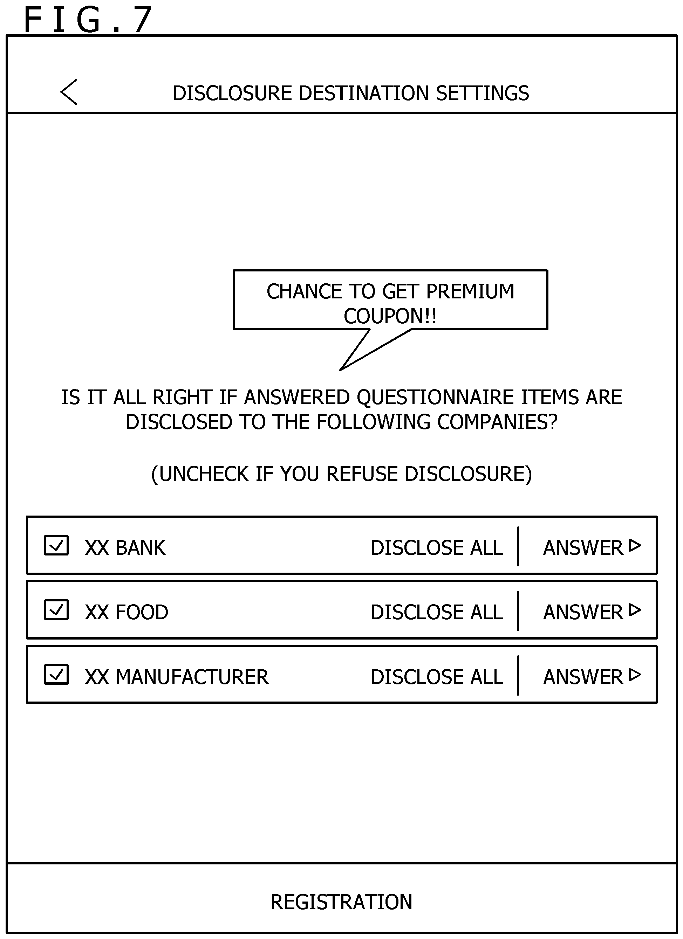

In addition, the control section 130 sets or changes the disclosure destination information in advance. FIG. 7 is a diagram illustrating an example of a disclosure destination setting screen. For example, the receiving section 131 receives the identification information of a user from a terminal device 10. Next, the extracting section 132 refers to the individual cells 122, identifies the individual cell 122 corresponding to the ID of the user using the ID and the password of the user, the ID and the password being input from the receiving section 131, and authenticates the user. When the control section 130 then receives a request to set the disclosure destination information from the terminal device 10, the control section 130 refers to the disclosure destination information of the individual cell 122 of the user, and generates a disclosure destination setting screen indicating present settings for business entities that may be specified as disclosure destinations. In addition, the control section 130 transmits the generated disclosure destination setting screen to the terminal device 10, and makes the disclosure destination setting screen presented via the API, as illustrated in FIG. 7.

In the example illustrated in FIG. 7, business entities that may be specified as disclosure destinations are displayed in a list. In addition, when a check box corresponding to a business entity is checked, it indicates that the business entity is specified as a disclosure destination, and when the check box is unchecked, it indicates that the business entity is not specified as a disclosure destination. By checking/unchecking the check box, the user may make a setting (change) as to whether disclosure is allowed or not, for example, make a setting (change) for selecting the business entity allowed as a disclosure destination. When the control section 130 receives the input of the setting or changing of the disclosure destination information by the user via the API, the control section 130 stores the disclosure destination information in the individual cell 122 of the user.

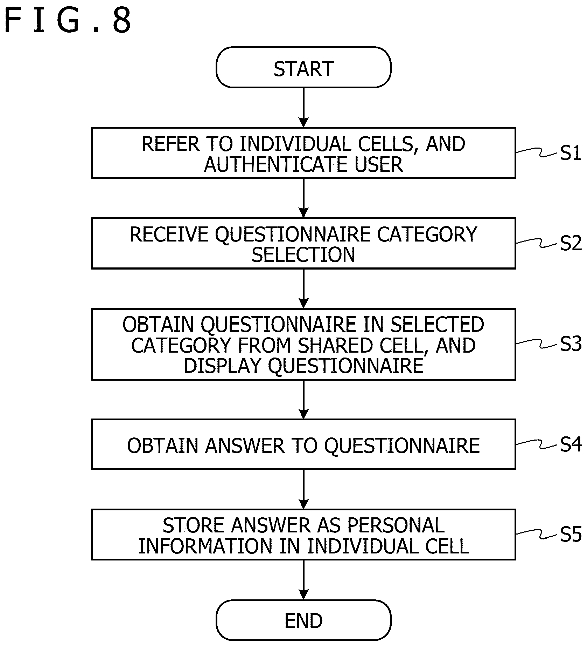

Operation of the information processing device 100 according to the embodiment will next be described. FIGs. 8 to 10 are flowcharts illustrating an example of the personal information management processing according to the embodiment.

First, FIG. 8 illustrates a flow of processing of storing personal information in an individual cell 122. As illustrated in FIG. 8, the receiving section 131 receives the identification information of a user from a terminal device 10. Next, the extracting section 132 refers to the individual cells 122, identifies the individual cell 122 corresponding to the ID of the user using the ID and the password of the user, the ID and the password being input from the receiving section 131, and authenticates the user (step S1).

Next, the extracting section 132 extracts questionnaire categories from the shared cell 121, and generates a questionnaire selecting screen for making the user select a questionnaire category. In addition, the extracting section 132 transmits the generated questionnaire selecting screen to the terminal device 10, and makes the questionnaire selecting screen presented to the user via the API. Then, the extracting section 132 receives an input selecting a category by the user on the questionnaire selecting screen presented on the terminal device 10 via the API (step S2).

Next, the extracting section 132 extracts a questionnaire in the selected category from the shared cell 121, and generates a questionnaire answering screen for making the user input an answer to the questionnaire. In addition, the extracting section 132 transmits the generated questionnaire answering screen to the terminal device 10, and makes the questionnaire answering screen displayed to the user via the API (step S3).

Then, the storage section 133 first receives an input of an answer to the questionnaire by the user via the API (step S4), and generates personal information. In addition, the storage section 133 stores the generated personal information in the individual cell 122 corresponding to the ID of the user, the individual cell 122 being identified by the extracting section 132 (step S5). A series of processing is thereby ended.

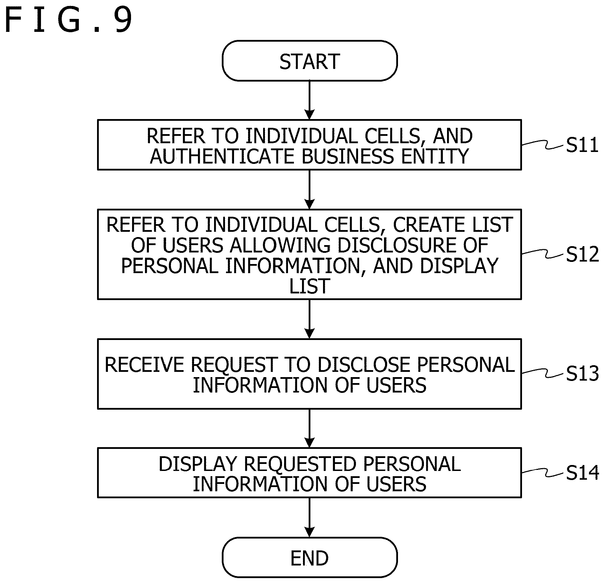

Next, FIG. 9 illustrates a flow of processing of disclosing the personal information to a business entity. As illustrated in FIG. 9, the receiving section 131 receives the identification information of the business entity from a terminal device 10. Next, the extracting section 132 refers to the individual cells 122, identifies the individual cell 122 corresponding to the ID of the business entity using the ID and the password of the business entity, the ID and the password being input from the receiving section 131, and authenticates the business entity (step S11).

In this case, the disclosing section 134 refers to the disclosure destination information of individual cells 122 of other users, the disclosure destination information being stored in the memory section 120, and creates a list of users specifying the business entity as a disclosure destination. In addition, the disclosing section 134 transmits a screen indicating the created list to the terminal device 10 of the business entity, and makes the screen displayed via the API (step S12).

In addition, the disclosing section 134 receives a request to disclose the personal information of the users included in the list via the API from the terminal device 10 of the business entity (step S13). In addition, the disclosing section 134 obtains the requested personal information of the users, and makes the personal information of the users displayed on the terminal device 10 of the business entity (step S14). A series of processing is thereby ended.

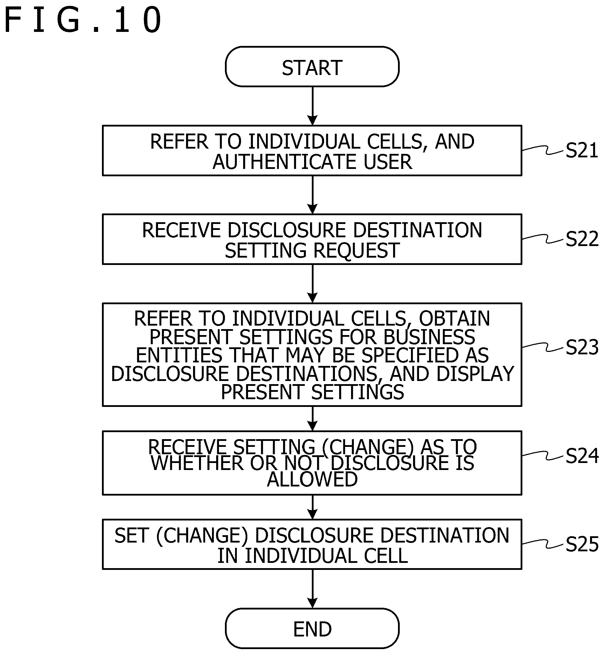

In addition, FIG. 10 illustrates a flow of processing of setting (changing) disclosure destination information. As illustrated in FIG. 10, the receiving section 131 receives the identification information of a user from a terminal device 10. Next, the extracting section 132 refers to the individual cells 122, identifies the individual cell 122 corresponding to the ID of the user using the ID and the password of the user, the ID and the password being input from the receiving section 131, and authenticates the user (step S21).

When the control section 130 then receives a request to set disclosure destination information from the terminal device 10 (step S22), the control section 130 refers to the disclosure destination information of the individual cell 122 of the user, and generates a disclosure destination setting screen indicating present settings for business entities that may be specified as disclosure destinations. In addition, the control section 130 transmits the generated disclosure destination setting screen to the terminal device 10, and makes the disclosure destination setting screen displayed via the API (step S23).

In addition, when the control section 130 receives, via the API, an input of a setting or a change by the user as to whether or not the disclosure destination information is allowed to be disclosed (step S24), the control section 130 stores the disclosure destination information in the individual cell 122 of the user and sets (changes) the disclosure destination information (step S25). A series of processing is thereby ended.

Thus, the information processing device 100 receives the identification information of a user. In addition, the information processing device 100 identifies an individual cell 122 as a region for storing the personal information of the user corresponding to the identification information in the memory section 120. In addition, the information processing device 100 transmits, to the terminal device 10 of the user, a questionnaire stored in the shared cell 121 as a region accessible with the right of an administrator other than the user. In addition, when the information processing device 100 receives an answer to the questionnaire, the information processing device 100 stores the answer in the identified individual cell 122 of the user.

It is thereby possible to store a questionnaire created by an operator of the information processing device 100 in the shared cell 121 in advance, and obtain answers of a large number of users as personal information. As a result, the information processing device 100 may store personal information efficiently.

In addition, in the information processing device 100, the individual cell 122 includes different regions for respective questionnaire categories. In addition, the information processing device 100 stores the answer in a region corresponding to a questionnaire category. As a result, the information processing device 100 may collect and store personal information more efficiently.

In addition, in the information processing device 100, the individual cell 122 includes different regions for the respective question information categories, and information indicating disclosure destinations of the personal information is associated with the respective different regions. In addition, the information processing device 100 stores answers in the regions corresponding to the question information categories, and outputs the personal information stored in the regions to the disclosure destinations of the personal information, the disclosure destinations being associated with the respective different regions. As a result, the information processing device 100 may disclose the personal information to appropriate disclosure destinations.

Incidentally, in the foregoing embodiment, an answer to a questionnaire is collected as personal information. However, without limitation to this, personal information may be collected separately from answers to questionnaires. For example, an answer to a questionnaire may be stored in a region for storing personal information received from the user. For example, in the information processing device 100, for example, when the storage section 133 as a first storage section receives the personal information of the user in association with the identification information of the user, the storage section 133 stores the personal information in the individual cell 122 of the user corresponding to the identification information in the memory section 120. In addition, when the storage section 133 as a second storage section receives the answer to the question information in association with the identification information of the user, the storage section 133 stores the answer in the individual cell 122 of the user.

In this case, the personal information may, for example, include attribute information such as an age, a place of residence, and a family structure as well as personal data such as a hobby, a preference, a daily state of mind, and a physical condition. The terminal device 10 of the user transmits personal information input from the user and personal information obtained by a sensor to the information processing device 100 in association with the ID of the user.

In addition, a destination from which the personal information is obtained is not limited to the terminal device 10 of the user, and may, for example, be a terminal device 10 in an external organization such as a hospital, a municipality, or a shop. In this case, the personal information is transmitted from the terminal device 10 in the external organization to the information processing device 100.

The personal information may be stored efficiently by thus storing also an answer to a question in the region for storing the personal information received from the user. For example, the accumulation of personal information through questions may be facilitated as compared with a case where the personal information is received from the user. In addition, high-quality personal information may be accumulated through questions.

In addition, the foregoing embodiment sets disclosure destinations according to questionnaire categories, but is not limited to this. For example, an answer to a questionnaire may be collected and accumulated in a region in which disclosure destinations are set prior to the answer. In this case, when the information processing device 100 receives the answer to the question information in association with the identification information of the user, the information processing device 100 stores the answer in a region associated with information indicating disclosure destinations of personal information, the region being in the individual cell 122 of the user corresponding to the identification information in the memory section 120. In addition, the information processing device 100 outputs, to the disclosure destinations of the personal information, the personal information stored in the region associated with the disclosure destinations of the personal information.

The personal information may be disclosed efficiently by thus storing an answer to a question in the region in which the disclosure destinations of the personal information are set. Hence, as compared with a case where disclosure destinations are set at the same time as an answer, it is possible to promote disclosure of the personal information by the user, and increase opportunities of gaining a value according to contents and information quantities of the disclosed personal information. In addition, for example, it becomes possible for a business entity to provide timely information suited to, for example, hobbies, preferences, behavior patterns, or the like of individuals based on the disclosed personal information. Thus, the utilization and application of the personal information may be expanded.

In addition, the respective constituent elements of each section illustrated in the figures do not necessarily need to be physically configured as illustrated in the figures. For example, concrete forms of distribution and integration of each section are not limited to those illustrated in the figures, and the whole or a part of each section may be configured so as to be distributed and integrated functionally or physically in arbitrary units according to various kinds of loads, usage conditions, or the like. In addition, pieces of processing illustrated in figures are not limited to the above-described order, and may be performed at the same time or may be performed with the order interchanged within a scope where no inconsistency arises in processing contents.

Further, the whole or an arbitrary part of various kinds of processing functions performed in each device may be performed on a CPU (or a microcomputer such as an MPU, a micro controller unit (MCU), or the like). In addition, it is needless to say that the whole or an arbitrary part of the various kinds of processing functions may be performed on a program analyzed and executed by a CPU (or a microcomputer such as an MPU, or an MCU) or on hardware based on wired logic.

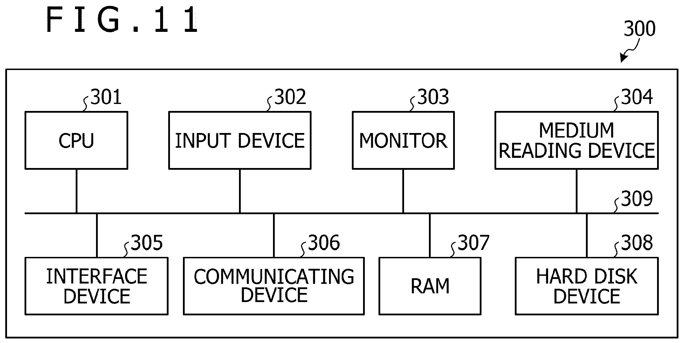

Various kinds of processing described in the foregoing embodiment may be implemented by executing a program prepared in advance on a computer. Accordingly, the following description will be made of an example of a computer that executes a program having functions similar to those of the foregoing embodiment. FIG. 11 is a diagram illustrating an example of a computer that executes a personal information managing program.

As illustrated in FIG. 11, the computer 300 includes: a CPU 301 that executes various kinds of arithmetic processing; an input device 302 that receives data input; and a monitor 303. In addition, the computer 300 includes: a medium reading device 304 that reads a program or the like from a storage medium; an interface device 305 for coupling with various kinds of devices; and a communicating device 306 for coupling to the terminal devices 10 and other information processing devices or the like by wire or radio. In addition, the computer 300 includes: a RAM 307 that temporary stores various kinds of information; and a hard disk device 308. In addition, the devices 301 to 308 are coupled to a bus 309.

The hard disk device 308 stores the personal information managing program having functions similar to those of the processing sections including the receiving section 131, the extracting section 132, the storage section 133, and the disclosing section 134 illustrated in FIG. 2. In addition, the hard disk device 308 stores various kinds of data for implementing the shared cell 121, the individual cells 122, and the personal information managing program. The input device 302, for example, receives input of various kinds of information such as operation information from an administrator of the computer 300. The monitor 303, for example, displays various kinds of screens such as a display screen to the administrator of the computer 300. The interface device 305 is, for example, coupled with a printing device or the like. The communicating device 306, for example, has functions similar to those of the communicating section 110 illustrated in FIG. 2. The communicating device 306 is connected to the network N, and exchanges various kinds of information with the terminal devices 10.

The CPU 301 performs various kinds of processing by reading programs stored in the hard disk device 308, expanding the programs in the RAM 307, and executing the programs. In addition, these programs may make the computer 300 function as the receiving section 131, the extracting section 132, the storage section 133, and the disclosing section 134 illustrated in FIG. 2.

It is to be noted that the above-described personal information managing program does not necessarily need to be stored in the hard disk device 308. For example, the program stored on a storage medium readable by the computer 300 may be read and executed by the computer 300. The following, for example, correspond to the storage medium readable by the computer 300: a portable recording medium such as a compact disc read only memory (CD-ROM), a digital versatile disc (DVD), or a universal serial bus (USB) memory, a semiconductor memory such as a flash memory or the like, and a hard disk drive. In addition, the personal information managing program may be stored in devices coupled to a public line, the Internet, a LAN, and the like, and the computer 300 may read the personal information managing program from these devices and execute the personal information managing program.

Personal information may be accumulated efficiently.

## Claims

1. A non-transitory computer-readable storage medium storing a program, the program causing a processor to execute a process, the process comprising:
receiving identification information of a user;
identifying a region for storing personal information of the user corresponding to the identification information in a memory, and transmitting question information stored in a region accessible with a right of an administrator other than the user to a terminal of the user; and
when receiving an answer to the question information, storing the answer in the identified region for storing the personal information of the user.

2. A non-transitory computer-readable storage medium for storing a program, the program causing a processor to execute a process, the process comprising:
when receiving personal information of a user in association with identification information of the user, storing the personal information in a region for storing the personal information of the user corresponding to the identification information in a memory; and
when receiving an answer to question information in association with the identification information of the user, storing the answer in the region for storing the personal information of the user.

3. A program for making a computer perform:
when receiving an answer to question information in association with identification information of a user, storing the answer in a region associated with information indicating a disclosure destination of personal information of the user, the region being a region for storing the personal information of the user corresponding to the identification information in a memory; and
outputting, to the disclosure destination of the personal information, the personal information stored in the region associated with the disclosure destination of the personal information.

4. The program according to claim 1 or 2, wherein
the region for storing the personal information of the user includes different regions for respective categories of the question information, and
storing the answer stores the answer in a region corresponding to a category of the question information.

5. The program according to claim 3, wherein
the region for storing the personal information of the user includes different regions for respective categories of the question information, and information indicating disclosure destinations of the personal information is associated with the respective different regions,
storing the answer stores the answer in a region corresponding to a category of the question information, and
outputting the personal information outputs the personal information stored in the region to the disclosure destinations of the personal information, the disclosure destinations being associated with the respective different regions.

6. A method of personal information managed by a computer, comprising:
receiving identification information of a user;
identifying a region for storing personal information of the user corresponding to the identification information in a memory, and transmitting question information stored in a region accessible with a right of an administrator other than the user to a terminal of the user; and
when receiving an answer to the question information, storing the answer in the identified region for storing the personal information of the user.

7. A method of personal information managed by a computer, comprising:
when receiving personal information of a user in association with identification information of the user, storing the personal information in a region for storing the personal information of the user corresponding to the identification information in a memory; and
when receiving an answer to question information in association with the identification information of the user, storing the answer in the region for storing the personal information of the user.

8. A method of personal information managed by a computer, comprising:
when receiving an answer to question information in association with identification information of a user, storing the answer in a region associated with information indicating a disclosure destination of personal information of the user, the region being a region for storing the personal information of the user corresponding to the identification information in a memory; and
outputting, to the disclosure destination of the personal information, the personal information stored in the region associated with the disclosure destination of the personal information.

9. The method according to claim 6 or 7, wherein
the region for storing the personal information of the user includes different regions for respective categories of the question information, and
storing the answer stores the answer in a region corresponding to a category of the question information.

10. The method according to claim 8, wherein
the region for storing the personal information of the user includes different regions for respective categories of the question information, and information indicating disclosure destinations of the personal information is associated with the respective different regions,
storing the answer stores the answer in a region corresponding to a category of the question information, and
outputting the personal information outputs the personal information stored in the region to the disclosure destinations of the personal information, the disclosure destinations being associated with the respective different regions.

11. An information processing device comprising:
a memory; and
a processor configured to communicate with the memory and the processor configured to
receive identification information of a user,
identify a region for storing personal information of the user corresponding to the identification information in the memory, and transmit question information stored in a region accessible with a right of an administrator other than the user to a terminal of the user, and
when receiving an answer to the question information, store the answer in the identified region for storing the personal information of the user.
